## Europäisches Patentamt

## European Patent Office

## Office européen des brevets

(11) Veröffentlichungsnummer: **0 541 007 A1**

# EUROPÄISCHE PATENTANMELDUNG

(21) Anmeldenummer: **92118562.5**

(22) Anmeldetag: **29.10.92**

(51) Int. Cl.5: **C10M 169/00**, H01B 7/28, H01B 3/22

(30) Priorität: **07.11.91 DE 4136617**

(43) Veröffentlichungstag der Anmeldung:
**12.05.93 Patentblatt 93/19**

(84) Benannte Vertragsstaaten:
**PT**

(71) Anmelder: **Henkel Kommanditgesellschaft auf Aktien**
**Henkelstrasse 67**
**W− 4000 Düsseldorf 13(DE)**

(72) Erfinder: **Heucher, Reimar, Dr.**
**Am Eggershof 22**
**W− 5024 Pulheim(DE)**
Erfinder: **Wichelhaus, Jürgen, Dr.**
**Egenstrasse 60**
**W− 5600 Wuppertal(DE)**
Erfinder: **Andres, Johannes**
**Weissdornweg 44**
**W− 4010 Hilden(DE)**

(54) **Füllmasse.**

(57) Es wird eine Füllmasse für elektrische und optische Vorrichtungen wie Kabel, Leisten, Stecker usw. beschrieben, die sich durch den Gehalt eines Stoffes mit sternförmiger Molekülstruktur auszeichnet. Dabei handelt es sich insbesondere um ein Oligo−Dec−1−en mit einem Oligomerisationsgrad von 3 und mehr. Setzt man diesem entweder hochdisperse Kieselsäure und ein hochmolekulares Polyolefin oder einen Viskositätsver− besserer wie hydriertes Polyisopren zu, so erhält man Füllmassen mit verbesserten thermischen Eigenschaften wie Konuspenetration bei −50 ˚C und Auslaufsicherheit bis +80 ˚C.

EP 0 541 007 A1

Die Erfindung betrifft eine Füllmasse für elektrische und optische Vorrichtungen wie Kabel, Leisten, Stecker usw. sowie damit hergestellte Vorrichtungen.

Elektrische und optische Vorrichtungen wie Kabel, Leisten, Stecker usw. müssen gegen eindringende Verunreinigungen, insbesondere Wasser, sowie auch vor mechanischer Beschädigung beim Verlegen oder aufgrund von Temperaturbeanspruchung geschützt werden. An einer Stelle eingedrungene Feuchtigkeit breitet sich nämlich aus und setzt so die Leistungsfähigkeit der Leitung herab.

Dieses Problem ist seit längerem bekannt. Zu seiner Lösung wurden schon viele Maßnahmen vorgeschlagen. So wird in der EP 0206234−B1 eine Füllmasse beschrieben, die aus 65 bis 90 Gew.−% Mineralöl aus 2 bis 25 Gew.−% eines organischen Verdickungsmittels, insbesondere eines Poly−$\alpha$−olefins, aus 2 bis 10 Gew.−% einer hochdispersen Kieselsäure sowie gewünschtenfalls aus 0,2 bis 10 Gew.−% Mikrohohlkörper und 0,1 bis 5 Gew,−% Dispergiermittel besteht.

Eine weitgehend gleiche Zusammensetzung beschreibt die FR−PS 26 44 004.

Derartige Zusammensetzungen vermögen zwar die hohen Anforderungen der Kabelindustrie, sowohl bezüglich der Gebrauchseigenschaften als auch bezüglich der Verarbeitbarkeit zu genügen. Jedoch werden heutzutage in bestimmten Bereichen höhere Anforderungen gestellt, insbesondere hinsichtlich extremer Temperatureinflüsse. So sollte die Füllmasse einerseits bei sehr tiefen Temperaturen noch flexibel sein anderseits aber auch bei recht hohen Temperaturen nicht auslaufen. Auch sollte der Flammpunkt möglichst hoch liegen. Selbstverständlich sollen auch die übrigen Anforderungen noch nach wie vor erfüllt werden, die üblicherweise von Füllmassen in elektrischen und optischen Vorrichtungen wie Kabeln, Leisten, Steckern gefordert werden. Im einzelnen können dies − je nach Art des Einsatzgebietes z.B. sein:

- Dielektrizitätskonstante
- Durchschlagfestigkeit
- spez. Widerstand
- Füllmassenaufnahme durch umhüllende Werkstoffe
- Wasser(dampf)permeation.

Es besteht also die Aufgabe, eine Füllmasse mit verbesserten Eigenschaften bei extremen Temperaturen zu finden, die aber auch den übrigen Anforderungen genügt, insbesondere sollte sie leicht zu verarbeiten sein.

Die erfindungsgemäße Lösung ist den Patentansprüchen zu entnehmen. Sie besteht im wesentlichen in der Auswahl eines sternförmigen Stoffes als Basis für die Füllmasse.

Unter "sternförmigen Stoff" wird ein Stoff mit verzweigter Molekülstruktur verstanden, wobei im Idealfall von einem einzigen Verzweigungspunkt 3 oder mehr Zweige, insbesondere Polymere Kettenteile ausgehen, z. B. HC $(CH_2−O−CO−C_9H_{19})_3$. Es sollen aber auch verzweigte Stoffe mit mehreren Verzweigungspunkten darunter fallen, wenn der Abstand zwischen diesen klein ist verglichen mit der Länge der Seitenkette: Das Verhältnis der Atome, die die Hauptkette bilden, zu denen, die die Seitenkette bilden, sollte 1 : 3 und weniger betragen. Im Falle des Tri−Dec−1−en mit der Strukturformel H−$[CH_2−CH(C_8H_{17})−]_3$ H beträgt es 1 : 4. Der sternförmige Stoff soll zweckmäßigerweise eine Viskosität zwischen 10 und 500, vorzugweise zwischen 20 und 60 mm$^2$/s (cST) bei 40 °C nach ASTM D445 aufweisen. Der Pourpoint nach ASTM D 97 soll unter −25 °C, bevorzugt unter −50 °C liegen.

Ein brauchbarer sternförmiger Stoff ist z. B. der Polyester aus einem Triol und Monocarbonsäuren: $CH_3−C(−CH_2−O−CO−Alkyl)_3$. Er kann bei 100 bis 200 °C in Gegenwart eines Säurekatalysators mit Toluol als Schleppmittel hergestellt werden. Derartige Polyolester werden bekanntlich zur Herstellung von Schmierölen auf Synthesebasis verwendet.

Vorzugsweise ist der sternförmige Stoff aber ein Poly−$\alpha$−olefin. Zu seiner Herstellung wird zunächst Ethylen oligomerisiert, z. B. zum Dec−1−en. An dessen Oligomerisation schließt sich eine destillative Aufbereitung und eine katalytische Hydrierung zur Beseitigung von Doppelbindungen an. Man erhält so aliphatische, flüssige Substanzen, die nur aus Kohlenstoff und Wasserstoff bestehen. Bevorzugtes Poly−$\alpha$−olefin ist das Oligo−Dec−1−en mit der Struktur: H−$[CH_2−CH(C_8H_{17})−]_n$ H mit n $\geq$ 3. Es kann von der Henkel Corporation (Emery) bezogen werden.

Zweckmäßigerweise enthält die Füllmasse neben dem sternförmigen Stoff ein Mineralöl. Darunter werden flüssige Destillationsprodukte aus mineralischen Rohstoffen wie Erdöl, Braunkohle, Steinkohle, Holz und Torf verstanden, die im wesentlichen aus Gemischen von gesättigten Kohlenwasserstoffen bestehen. Das Mineralöl sollte in einer Menge von 0 bis 10 Gew.−%, vorzugsweise von 1 bis 5 Gew.−%, bezogen auf den sternförmigen Stoff, zugesetzt werden.

Zweckmäßigerweise werden als weitere Bestandteile noch eine hochdisperse Kieselsäure zugesetzt, und zwar in einer Menge von 0 bis 15 Gew.−%, vorzugsweise von 0,5 bis 6 Gew.−%, hochdisperse Kieselsäure, bezogen auf den sternförmigen Stoff.

Unter hochdisperser Kieselsäure wird in erster Linie pyrogene Kieselsäure verstanden, obwohl auch andere hochdisperse Kieselsäuren eingesetzt werden können. Sie haben vorzugsweise eine Teilchengröße zwischen 0,007 und 0,05, vorzugsweise zwischen 0,007 und 0,014 Mikrometer und ein Schüttgewicht zwischen 20 und 120, vorzugsweise zwischen 35 und 40 g/pro l. Gängige Handelsprodukte an brauchbarer Kieselsäure sind CAB−O−Sil von der Firma Cabot Corporation, Aerosil von der Firma Degussa und HDK von der Firma Wacker−Chemie.

Der Zusatz an Kieselsäure bewirkt vor allem ein plastisches Fließverhalten. Darunter wird die Eigenschaft verstanden, daß die Füllmasse aufgrund ihres Eigengewichts nicht fliessen kann. Bei Schubspannungswerten unter der Fließgrenze verhält sich also das disperse System wie ein fester Körper und ist als solcher elastisch verformbar. Die Dispersion fließt erst dann, wenn die Fließgrenze überschritten wird.

Als weiterer Bestandteil ist ein hochmolekulares Polyolefin empfehlenswert, und zwar in einer Menge von 0 bis 10 Gew.−%, bevorzugt von 0,05 bis 2 Gew.−%. Unter hochmolekularen Polyolefinen werden Homo− und Co−Polymerisate von Alkenen verstanden mit einem Molekulargewicht von mindestens 0,5 Millionen, vorzugsweise mehr als 2 Millionen. In Frage kommen Polyethylene, Polypropylene, Polyisobutylene sowie vorzugsweise Polybutene und deren Gemische und Copolymere.

Vorzugsweise werden einerseits sowohl Kieselsäure als auch ein hochmolekulares Polyolefin zugesetzt.

Es kann andererseits auch zweckmäßig sein, dem sternförmigen Stoff als weitere Komponente einen oder mehrere Viskositäts−Index−Verbesserer zuzusetzen und zwar in einer Menge von 1 bis 20 Gew.−%, bezogen auf den sternförmigen Stoff. Dadurch wird das Viskositätsverhalten insofern verbessert, als die Viskosität nicht mit zunehmender Temperatur wie üblich abnimmt. Bei den Viskositäts−Index−Verbesserer handelt es sich um Polymere mit einem mittleren Molekulargewicht zwischen 10 000 und 100 000, vorzugsweise zwischen 10 000 und 20 000. Als Viskositäts−Index−Verbesserer sind bekannt: Polyisobutene, Dien−Polymere, Copolymere aus Ethylen und Propylen und Polyalkylstyrole. Von den bekannten Viskositäts−Index−Verbesserern werden die für den vorliegenden Zweck brauchbaren Verbindungen vor allem unter folgenden zwei Gesichtspunkten ausgesucht: Sie sollen innert gegenüber den Kabelmaterialen sein. Sie sollen sich in dem sternförmigen Stoff bei tiefen Temperaturen schlecht und bei hohen Temperaturen gut lösen. Als besonders brauchbar erwies sich ein hydriertes Copolymeres aus Isopren und Styrol (Shellvis 50) von der Firma Shell.

Die erfindungsgemäßen Füllsubstanzen können weiterhin Dispergierhilfsmittel enthalten. Als Dispergierhilfsmittel eignen sich hier Polykondensate, insbesondere Polykondensate auf Basis hydrophober und hydrophiler Komponenten. So können Polykondensate eingesetzt werden, die wenigstens zum Teil aus Dimerfettsäuren oder den dazu korrespondierenden Diaminen aufgebaut sind. Geeignete Kondensate sind Polyamide aus Dimerfettsäuren und Diaminen oder Polyester aus Dimerfettsäuren und mehrfunktionellen Alkoholen (Funktionalität 2 oder 3). Auch Mischtypen können eingesetzt werden. Bevorzugt sind Polykondensate mit endständigen Aminogruppen. So sind beispielsweise Polykondensate aus einer langkettigen Dicarbonsäure mit einem oder mehreren Diaminen oder Triaminen, insbesondere Kondensationsprodukte von Dimerfettsäuren, Trimerfettsäuren, monomeren Fettsäuren und primären oder sekundären Diaminen mit 2−36 Kohlenstoffatomen (Dimerfettamin) geeignet. Auch Polykondensate von Dicarbonsäuren mit cyclischen Diaminen, wie Piperazin, können eingesetzt werden. Im geringen Maße können die Dimerfettsäuren auch durch kurzkettige Dicarbonsäuren, beispielsweise Sebacinsäure oder Adipinsäure ersetzt sein. Häufig ist es bevorzugt, wenn die Polykondensate endständige Aminogruppen aufweisen. Günstig sind Aminzahlen zwischen 80 und 400, insbesondere zwischen 190 und 230. So hat beispielsweise ein bevorzugtes Material diese Kennzahlen und darüber hinaus eine Viskosität von 0,3−4 Pas bei 75 °C, andere geeignete Produkte zeigen eine Viskosität von 0,7−1,2 Pas bei 150 °C. Gewünschtenfalls können die oligomeren Dispergatoren auch durch Fettsäureester und/oder Fettalkoholether ganz oder teilweise ersetzt werden.

Als weitere Bestandteile können die erfindungsgemäßen Füllmassen noch in derartigen Zubereitungen übliche Hilfsstoffe enthalten. So können beispielsweise Antioxidationsmittel, Farbstoffe oder auch Korrosionsinhibitoren miteingesetzt werden.

Für die Herstellung von Füllmassen sind alle effektiven, aber schonend arbeitenden Mischaggregate geeignet, die eine wirksame Durchmischung auch bei geringer Umdrehungszahl ermöglichen, z. B. Turbulentmischer.

Die erfindungsgemäßen Füllmassen lassen sich bei Raumtemperatur oder leichter Erwärmung auf bis zu 60 °C problemlos fördern. So wird ein Reißen oder die Bildung von Lufteinschlüssen oder Vakuolen beim Fördern nicht beobachtet. Auch das Gießen in die Formen bereitet keine Probleme. Das Volumen wird blasenfrei ausgefüllt.

Die erfindungsgemäßen Füllsubstanzen eignen sich dazu, elektrische Bauteile der verschiedensten Art wie beispielsweise Kabel, Stecker, Leisten, Kommunikationskabel oder auch Lichtwellenleiter gegen das Eindringen von Verunreinigungen, insbesondere Feuchtigkeit, zu schützen. Die Füllmassen eignen sich weiterhin zum Schutz von Lichtwellenleitern aus Glas gegen mechanische Schädigung, wie sie beim Verlegen durch Biegen und Tieftemperaturbeanspruchung auftreten kann. Darüber hinaus können die erfindungsgemäßen Füllsubstanzen auch als Reparaturdichtstoffe eingesetzt werden, etwa wenn elektrische Leitungen oder Bauteile im Rahmen von Verlegearbeiten entisoliert oder beschädigt worden sind und erneut isolierend verfüllt werden müssen.

Die Füllsubstanzen zeigen eine Fülle hervorragender technischer Eigenschaften. So ist der Isolations − widerstand hoch und der spezifische Volumenwiderstandsfaktor groß. Die Dielektrizitätskonstante ist niedrig, d. h. es können Werte unter 2,3 und insbesondere auch unter 2 eingestellt werden. Das spezifische Gewicht bevorzugter Füllmassen ist kleiner als 1. Sie sind mit den verschiedensten Kunststoffen, die im Bereich elektrischer Bauteile und Kabel verwendet werden, verträglich. So dringen die Bestandteile der Füllmassen praktich nicht in derartige Kunststoffe ein und auch die gängigen Kabelmantelmaterialien werden nicht verändert. Die Füllmassen sind bis zu Temperaturen von 100 ˚C absolut stabil und werden nicht fließend, auch bei Beschädigungen bei diesen Temperaturen tritt kein Auslaufen auf. Weiterhin sind die Füllmassen flexibel, die Flexibilität blieb bei Temperaturen bis zu minus 50 ˚C erhalten, ohne daß sich die rheologi − schen Eigenschaften drastisch verändern und ohne daß bei tiefen Temperaturen bei Beanspruchung Risse auftreten. Darüber hinaus sind die Füllsubstanzen nach der Erfindung leicht verarbeitbar, d. h. bereits bei Temperaturen unterhalb von 60˚C können sie mit mäßigem Druck in die zu befüllenden Kabelmäntel eingelassen werden, wobei selbst schwer zugängliche Stellen erreicht werden.

Alle erfindungsgemäßen Füllmassen erfüllen folgende Anforderungen:

Flammpunkt in ˚C nach DIN ISO 2592: > 200˚C,

Dielektrizitätskonstante bei 20˚C nach DIN 53483: < 2,3,

Spez. Durchgangswiderstand bei 100˚C in cm nach DIN 53482: > $10^{10}$,

Viskosität bei 20 ˚C: z.B. < 20 Pa•s bei D = $20s^{−1}$,

Konuspenetration nach DIN 51580 bei − 40˚C > 250 [1/10 mm] oder bei − 50 ˚C > 200 mm/10 und

Masseaufnahme im Kabelmantel PE (70 ˚C 10 d): < 5 %.

Bereits vorhergenannte Eigenschaften wurden nach folgender Methode bestimmt.

− Dichte durch Wiegen eines definierten, blasenfreien Volumens (> 100 ml) der zu bestimmenden Masse bei Meßtemperatur. Die Berechnung erfolgt auf bekanntem Wege.
− Die Masseaufnahme wird bestimmt in Anlehnung an DIN 57472, wobei Prüfplatten von 40 x 40 x 3 mm Größe 10 Tage bei 70 ˚C in der Füllmasse gelagert werden. Die Differenz wird gravimetrisch erfaßt.
− Der Flammpunkt wird nach DIN ISO 2592 bestimmt.
  Das Austropfverhalten wird bestimmt nach einem Netz/Siebtest
− Fed. Test Method STD. NO. 791 B oder
− JIS K 2220, S. 7 oder
− CNET ST LAA / ELR / CSD / 543,

die allesamt die Ölseparation aus 10 g Füllmasse durch ein konisches Drahtnetz von ~ 250 μm lichter Maschenweite beschreiben. Im vorliegenden Falle wurde Prüfdauer und Temperatur auf 24 Stunden und +80 ˚C festgelegt.

Um die vorteilhaften Eigenschaften vor allem hinsichtlich Kälteflexibilität und Standfestigkeit zu zeigen, wurden die erfindungsgemäßen Massen mit denen der Vergleichsbeispiele verglichen. Dabei wurden folgende Meßmethoden verwendet:

Methode I

Auslaufsicherheit gemäß Tropftest: nach FTM STD Nr. 791 B bzw. JIS, K 2220 S. 7

Methode II

Konuspenetration nach DIN 51580

Methode III

Messung von Fließkurze / Viskosität
Meßgerät: Contraves Meßsystem DIN 125

Die Erfindung wird anhand der nachfolgenden Beispiele im einzelnen beschrieben:
A) Eingesetzte Komponenten
  a) Synthetisches Öl, α − Olefin − Copolymer, SAP 601 der Fa. Shell, typische Daten:
    kinematische Viskosität, $mm^2/s$, 40 ˚C = 30,5 $mm^2/s$

4

Flammpunkt: 238 °C ASTM D92

Pour Point: − 68 °C ASTM D97

b) Shellvis 50, Styrol − Isopren − Copolymer (hydriert),

Lieferant: Fa. Shell

c) Kieselsäure: Cab•o•sil M5 Fa. Cabot,

typische Werte: BET − Zahl 200 ± 25 m²/g,

Teilchengröße: ca. 14•10⁻⁹ m

d) A 247 von Henkel Corp. USA,

5,6 %ige Lösung eines hochmolekularen Polybutens(iso) in Mineralöl und Estern.

B) Herstellung der Füllmassen, einschließlich Charakterisierung

Füllmasse: Beispiel 1

In einem Turbulentmischer mit Fassungsvolumen 1 000 l wurden 621,6 kg SAP 601 vorgelegt, bei Raumtemperatur 78,4 kg Shellvis 50 zugegeben und durch Mischen homogen verteilt. Mittels indirektem Dampf wurde die Temperatur auf 120 bis 130 °C gesteigert und solange gemischt, bis alle Feststoff − Teilchen gelöst waren. Die Kontrolle erfolgte durch Aufstrich auf eine Glasplatte sowie durch Überprü − fung von Viskosität und Fließgrenze. Nach positivem Ergebnis wurde evakuiert und über einen Filter blasenfrei in entsprechende Emballagen abgelassen.

Füllmasse: Beispiel 2

In einem Mischer (s. Beispiel 1) wurden 658 kg SAP 601 vorgelegt, 7 kg A 247 zugegeben und bei Raumtemperatur homogen verteilt bzw. gelöst. Während der Aufheizphase mittels indirektem Dampf auf ca. 120 bis 130 °C wurden 35 kg Cab•o•sil MS portionsweise zugegeben und durch Mischen homogen verteilt. Die Kontrolle und Charakterisierung erfolgten wie in Beispiel 1 beschrieben.

Nach Evakuierung wurde über Filter blasenfrei abgefüllt.

**Tabelle 1:** Zusammensetzung (in Gew.-%) und Eigenschaften
erfindungsgemäßer Beispiele

| Rohstoffe | 1 | 2 |
|---|---|---|
| PAO 6 | 88,8 | 94 |
| Kieselsäure | - | 5,0 |
| Shellvis 50 | 11,2 | - |
| A 247 | - | 1,0 |
| Tropffest 24 h, 80 °C | 0 | 0 |
| Konuspenetration in mm/10 bei +20 °C | 420 | 395 |
| bei -40 °C | 280 | 240 |
| Viskosität in Pa·s bei $D = 20s^{-1}$ | 9,5 | 15 |

**Patentansprüche**

1. Füllmasse für elektrische und optische Vorrichtungen wie Kabel, Leisten, Stecker usw., die einen sternförmigen Stoff enthält.

2. Füllmasse nach Anspruch 1, gekennzeichnet durch ein Poly−α−olefin, insbesondere ein Oligo−Dec−1−en mit einem Oligomerisationsgrad von 3 und mehr als sternförmigem Stoff.

3. Füllmasse nach Anspruch 1, gekennzeichnet durch einen Zusatz eines Mineralöls, vorzugsweise in einer Menge von 1 bis 5 Gew.−%, bezogen auf den sternförmigen Stoff.

4. Füllmasse nach mindestens einem der Ansprüche 1 bis 3, gekennzeichnet durch den Zusatz einer hochdispersen Kieselsäure und/oder eines hochmolekularen Polyolefins, insbesondere eines Polybutens.

5. Füllmasse nach Anspruch 4, gekennzeichnet durch einen Gewichtsanteil von 0,5 bis 6 Gew.−% an hochdisperser Kieselsäure und/oder 0,05 bis 2 Gew.−% an hochmolekularem Polyolefin, jeweils bezogen auf den sternförmigen Stoff.

6. Füllmasse nach mindestens einem der Ansprüche 1 bis 3, gekennzeichnet durch den Zusatz eines Viskositäts−Index−Verbesseres, vorzugsweise in einer Menge von 1 bis 20 Gew.−%, bezogen auf den sternförmigen Stoff.

7. Füllmasse für elektrische und optische Vorrichtungen wie Kabel, Leisten, Stecker usw. auf Basis von Kohlenwasserstoffen, gekennzeichnet durch eine Konuspenetration von mehr als 200 bei minus 50˚C sowie eine Auslaufsicherheit bis zu einer Temperatur von mindestens 80˚C.

8. Füllmasse nach Anspruch 7, gekennzeichnet durch die Komponenten nach mindestens einem der Ansprüche 1 bis 6.

9. Elektrische und optische Vorrichtungen wie Kabel, Leisten, Stecker usw. mit einer Füllmasse nach mindestens einem der Ansprüche 1 bis 8.

10. Verwendung der Füllmasse nach mindestens einem der Ansprüche 1 bis 8 als Aderfüllmasse für die Herstellung von Lichtwellenleiterkabel.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 371 374 (FULLER)<br><br>* das ganze Dokument *<br>--- | 1,2,4,5,<br>9,10 | C10M169/00<br>H01B7/28<br>H01B3/22 |
| Y | WO-A-8 912 662 (MOBIL OIL)<br><br>* das ganze Dokument *<br>--- | 1,2,4,5,<br>9,10 | |
| A | WO-A-9 010 050 (MOBIL OIL)<br>* das ganze Dokument *<br>--- | 1 | |
| A | FR-A-1 592 085 (I.F.P.)<br>* das ganze Dokument *<br>--- | 1-10 | |
| A | US-A-4 749 502 (ALEXANDER ET AL.)<br>* das ganze Dokument *<br>--- | 1-10 | |
| A | EP-A-0 039 867 (SIEMENS)<br>* das ganze Dokument *<br>--- | 1-10 | |
| D,A | FR-A-2 644 004 (TOTAL)<br>* Zusammenfassung *<br>--- | 1-10 | **RECHERCHIERTE SACHGEBIETE (Int. Cl.5)** |
| D,A | EP-A-0 206 234 (HENKEL)<br>* das ganze Dokument *<br><br>----- | 1-10 | C10M<br>H01B |

Der vorliegende Recherchenbericht wurde für alle Patentansprüche erstellt

| Recherchenort | Abschlußdatum der Recherche | Prüfer |
|---|---|---|
| DEN HAAG | 30 DEZEMBER 1992 | DE LA MORINERIE |